# EUROPEAN PATENT APPLICATION

(11) **EP 3 219 430 A1**
(43) Date of publication of application: **20.09.2017**
(21) Application number: 17150190.1
(22) Date of filing: 03.01.2017
(51) Int. Cl.: B23K 26/03, B23K 26/362, B23K 26/38, B23K 26/382, B23K 26/042, B23K 26/082, B23K 101/00

(54) **LASER MACHINING SYSTEM AND MACHINING CONTROL METHOD**

(30) Priority: 15.03.2016 JP 2016050602
(71) Applicant: Omron Corporation, Kyoto 600-8530 (JP)
(72) Inventor: FUKUI, Hiroshi, Kyoto, 600-8530 (JP); FUTAGAMI, Yoshihiro, Kyoto, 600-8530 (JP); MINATOGUCHI, Shinya, Kyoto, 600-8530 (JP); ASHIHARA, Yoshimitsu, Kyoto, 600-8530 (JP); SAKAMOTO, Tatsunori, Kyoto, 600-8530 (JP)
(74) Representative: Piotrowicz, Pawel Jan Andrzej

(57) **Abstract**

A laser marker (2) has: a controller (21) having an oscillator (240) configured to oscillate a laser beam (L); and a head (26) configured to scan a machining surface of a machining target (8) with the laser light (L) based on control of the controller (21). The controller (21) is configured to transmit, to the image processing apparatus (3), a command for instructing the image processing apparatus (3) to perform a predetermined scene, when the controller (21) is set to cause the image processing apparatus (3) to perform the scene. When the command is received, the image processing apparatus (3) is configured to calculate a deviation amount of the machining target (8) relative to a reference position (P) using image data of an image of the machining target (8) captured by the marker head (26) and to notify the deviation amount to the controller (21). The controller (21) is configured to correct a position to be scanned with the laser beam (L) based on the deviation amount and then cause the marker head (26) to perform the scanning.

## Description

### BACKGROUND OF THE INVENTION

### Field of the Invention

The present invention relates to a laser machining system including a laser machining apparatus, and a machining control method in the laser machining system.

### Description of the Background Art

Conventionally, a laser machining apparatus has been known which is configured to machine a machining target (workpiece) using laser light. Moreover, as one type of laser machining apparatus, a laser marker has been known which is configured to mark a surface of a marking target (workpiece) with a letter/character, a figure, and/or the like using laser light. Moreover, in recent years, a laser marker has also been developed which is capable of performing various types of machining such as perforation, peeling, and cutting in addition to the marking.

Japanese Patent Laying-Open No. 2013-086173 discloses a laser machining apparatus for calibrating an error of an irradiation position of laser light in a simple manner. This laser machining apparatus includes a mirror, an optical axis manipulation structure, a camera sensor, and an error calibration structure. The following describes these components.

The mirror reflects laser light, oscillated from a laser oscillator, to a predetermined surface on which a machining target is placed. The optical axis manipulation structure changes a direction of the mirror to position the optical axis of the laser light to a desired target irradiation position. The camera sensor captures an image of the target irradiation position and its surrounding region reflected in the mirror. The error calibration structure makes reference to the image captured by the camera sensor in order to detect an error between the target irradiation position as instructed to the optical axis manipulation structure and the position of the optical axis of the actual laser light on the predetermined surface. Based on the error, the laser machining apparatus determines an amount of correction of instruction to be provided to the optical axis manipulation structure in order to irradiate the target irradiation position with the laser light during machining.

As the above-described laser marker, Japanese Patent Laying-Open No. 2013-184171 discloses a marking apparatus for continuously marking successively-conveyed marking targets with a predetermined drawing pattern without fluctuations. The marking apparatus includes a conveyance unit, a marking-unit first movement unit, a marking-unit second movement unit, a marking position correction unit, a marking position overlapping control unit, a synchronized movement control unit, and a general control unit.

The conveyance unit continuously convey a marking target in a first direction. The marking-unit first movement unit moves a marking unit in the first direction. The marking-unit second movement unit moves the marking unit in a second direction. The general control unit controls the marking position overlapping control unit and the synchronized movement control unit to emit, for a predetermined time, a marking light beam (laser light) to the same position on the marking target in the first direction and the second direction while continuously conveying marking targets in the first direction.

### SUMMARY OF THE INVENTION

The laser marker performs marking by emitting laser light from a marker head to a position determined based on each marking layout. However, if there occurs a deviation between the position at which the marking target is placed and the position determined based on the marking layout, a marking cannot be provided to the intended position. In order to prevent occurrence of such a situation, an image processing apparatus (also referred to as "visual sensor") can be used as follows.

Specifically, the image processing apparatus employs the image data of the image of the marking target captured by the camera to check how much the marking target is deviated relative to a predetermined reference position. That is, the image processing apparatus calculates a deviation amount. The image processing apparatus notifies the check result (calculated deviation amount) to the laser marker via a PLC (Programmable Logic Controller). Based on the received deviation amount, the laser marker corrects a scanning position of the laser light. Specifically, the laser marker performs position correction to the marking layout based on the deviation amount. It should be noted that the general control unit in Japanese Patent Laying-Open No. 2013-184171 corresponds to the PLC.

However, in order to implement these processes, it is necessary to execute, on the PLC, a control program (for example, a ladder program) for controlling an operation of each of the laser marker and the image processing apparatus. Hence, a user needs to make a preparation of creating a control program in advance, or the like.

The invention of the present application has been made in view of the above problem, and has an object to provide a laser machining system in which laser machining can be implemented by a laser machining apparatus in cooperation with an image processing apparatus without using a PLC.

According to an aspect of the present invention, a laser machining system includes a laser machining apparatus and an image processing apparatus. The laser machining apparatus includes a controller and a head, the controller having an oscillator configured to oscillate laser light, the head being configured to scan a machining surface of a machining target with the laser light based on control of the controller. The controller is configured to transmit, to the image processing apparatus, a first command for instructing the image processing apparatus to perform a first process, when the controller is set to cause the image processing apparatus to perform the first process. When the first command is received, the image processing apparatus is configured to calculate a deviation amount of the machining target relative to a reference position using image data of a captured image of the machining target and to notify the deviation amount to the controller. The controller is configured to correct a position to be scanned with the laser light based on the deviation amount and then cause the head to perform the scanning.

Preferably, the image processing apparatus is capable of performing a plurality of processes including the first process. The controller is configured to transmit, to the image processing apparatus, a second command for designating the first process, before transmitting the first command. The image processing apparatus is configured to confirm, based on the second command, that the designated first process is included in the plurality of processes, and then notify a result of the confirmation to the controller.

Preferably, the controller is configured to transmit the first command to the image processing apparatus under a condition that the result of the confirmation is notified.

Preferably, when a third command for designating a second process not included in the plurality of processes is received from the controller instead of the second command before receiving the first command, the image processing apparatus is configured to provide the controller with a predetermined notification indicating that the process designated in the controller is not able to be performed.

Preferably, the controller is configured to transmit the second command to the image processing apparatus under a condition that information for specifying the machining target is registered in the controller.

Preferably, when the deviation amount is not able to be received from the image processing apparatus before passage of a predetermined period of time from a time at which the first command is transmitted, the controller is configured not to cause the head to perform the scanning.

Preferably, the controller stores an application program for setting a layout of a mark to be provided by the laser light. The controller is configured to accept, via a user interface displayed when the application program is executed, registration of a setting for causing the image processing apparatus to perform the first process.

According to another aspect of the present invention, a laser machining system includes a laser machining apparatus and an image processing apparatus. The laser machining apparatus includes a controller and a head, the controller having an oscillator configured to oscillate laser light, the head being configured to scan a machining surface of a machining target with the laser light based on control of the controller. The controller is configured to transmit, to the image processing apparatus, a first command for instructing the image processing apparatus to perform a first process, when the controller is set to cause the image processing apparatus to perform the first process. When the first command is received, the image processing apparatus is configured to calculate a position of the machining target using image data of a captured image of the machining target and notify the calculated position to the controller. The controller is configured to calculate a deviation amount of the calculated position relative to a reference position. The controller is configured to correct a position to be scanned with the laser light based on the deviation amount, and then cause the head to perform the scanning.

According to still another aspect of the present invention, a machining control method is performed in a laser machining system including a controller, a head, and an image processing apparatus, the controller having an oscillator configured to oscillate laser light, the head being configured to scan a machining surface of a machining target with the oscillated laser light. The machining control method includes: transmitting, by the controller to the image processing apparatus, a command for instructing the image processing apparatus to perform a predetermined process, under a condition that the controller is set to cause the image processing apparatus to perform the predetermined process; calculating, by the image processing apparatus, a deviation amount of the machining target relative to a reference position using image data of an image of the machining target, under a condition that the command is received; notifying, by the image processing apparatus, the calculated deviation amount to the controller; and correcting, by the controller, a position to be scanned with the laser light based on the deviation amount, and then causing, by the controller, the head to perform the scanning.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram showing a schematic configuration of a laser machining system.
Fig. 2 is a schematic diagram showing the configuration of the laser machining system more in detail.
Fig. 3 is a schematic diagram showing hardware included in a control board.
Fig. 4 is a schematic diagram showing hardware included in an image processing apparatus.
Fig. 5 shows a user interface displayed on a display device by a controller.
Fig. 6 is a flowchart for illustrating a flow of process in the laser machining system.
Fig. 7A illustrates marking position correction performed in a laser marker, and shows an ideal position of a machining target.
Fig. 7B illustrates the marking position correction performed in the laser marker, and shows an actual position of the machining target detected based on image data of an image captured by a camera unit.

### DESCRIPTION OF THE PREFERRED EMBODIMENTS

The following describes an embodiment of the present invention in detail with reference to figures. It should be noted that the same or corresponding portions in the figures are given the same reference characters and are not described repeatedly. In the description below, a laser marker will be illustrated as a laser machining apparatus. It should be noted that the laser marker according to the present embodiment may have not only a function of marking with a letter/character and/or a sign but also a function of machining other than the marking, such as perforation, peeling, or cutting.

### <A. Schematic Configuration of Marking System>

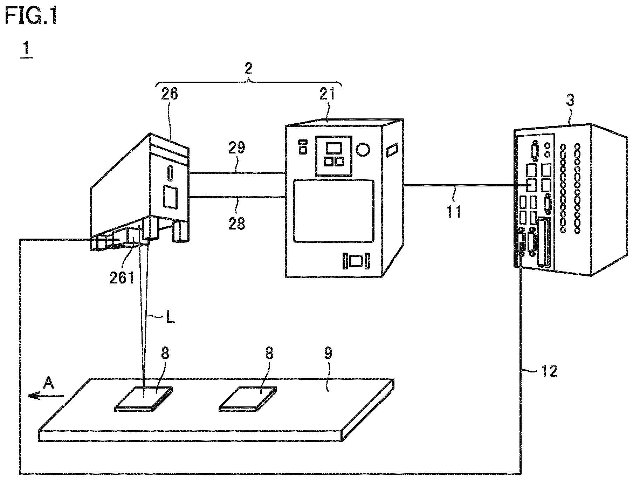

Fig. 1 is a schematic diagram showing a schematic configuration of a laser machining system 1. With reference to Fig. 1, laser machining system 1 includes a laser marker 2 and an image processing apparatus 3 (also referred to as "visual sensor"). Laser marker 2 has a controller 21 and a marker head 26.

Controller 21 controls an operation of marker head 26. Moreover, although described later in detail, controller 21 has a laser oscillator configured to oscillate laser light L.

Marker head 26 has a camera unit 261. Based on control of controller 21, marker head 26 emits laser light L to a machining target 8 (machining target 8 on the left side in the state of Fig. 1) placed on a member 9 for placing machining target 8 thereon. Specifically, the marker head scans, with laser light L, a machining surface of machining target 8. It should be noted that in the example of Fig. 1, when the process (series of processes including the scanning) onto machining target 8 is ended, member 9 is moved leftward (direction of arrow A of the figure), with the result that a next machining target 8 (machining target 8 on the right side in Fig. 1) is irradiated with laser light L.

Camera unit 261 has an image capturing device (specifically, a camera) and a communication device. The image capturing device of camera unit 261 is configured to be capable of capturing an image of a predetermined region. In a certain aspect, the image capturing device captures an image of machining target 8 as a subject. Meanwhile, the communication device of camera unit 261 transmits the captured image data to image processing apparatus 3 via a communication cable 12.

Marker head 26 is connected to an oscillator in controller 21 via an optical fiber 28. Furthermore, marker head 26 is connected to controller 21 via a control cable 29. Specifically, marker head 26 is connected to a control board in controller 21 via control cable 29. It should be noted that the manner of connection between controller 21 and marker head 26 is the same as that in a conventional configuration, and is therefore not described here in detail.

In laser machining system 1 according to the present embodiment, controller 21 of laser marker 2 is directly connected to image processing apparatus 3 via a LAN. Typically, controller 21 is directly connected to image processing apparatus 3 through Ethernet®. Specifically, controller 21 is directly connected to image processing apparatus 3 through an Ethernet cable 11 not via a control device such as a PLC.

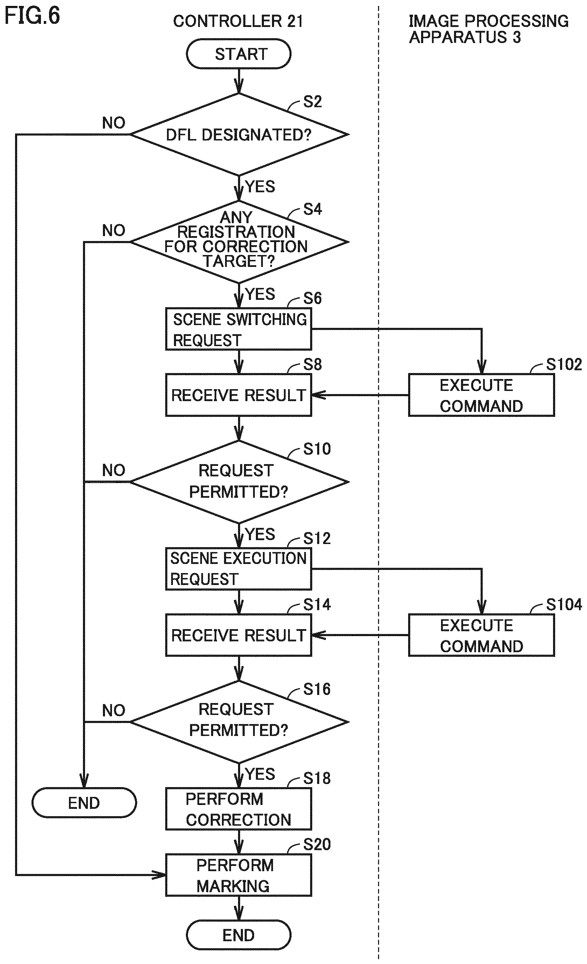

It should be noted that details of communication between controller 21 and image processing apparatus 3 will be described later (Fig. 6).

### <B. Detailed Configuration of Laser Machining System 1>

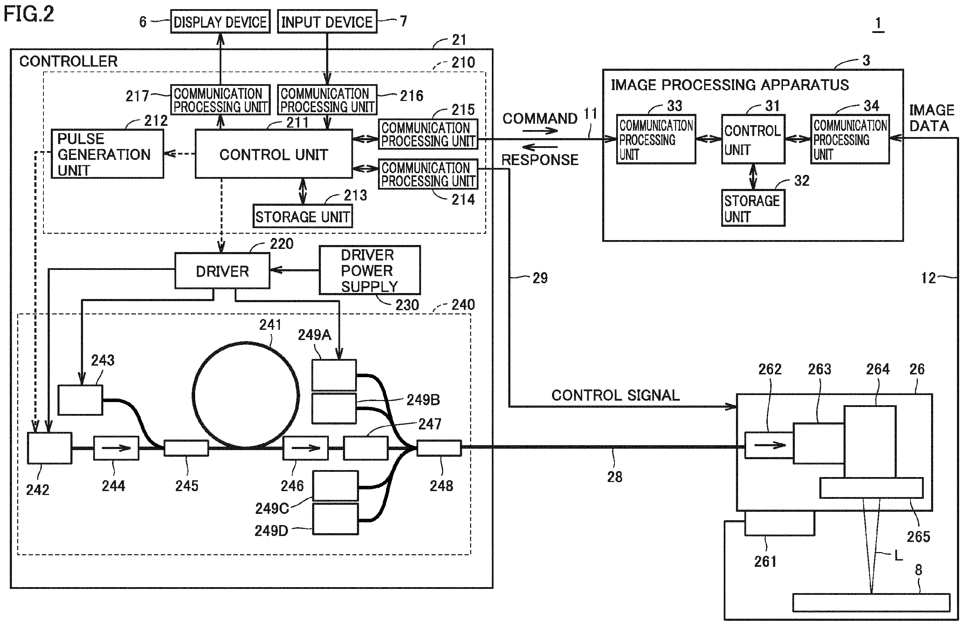

Fig. 2 is a schematic diagram showing a configuration of laser machining system 1 more in detail. With reference to Fig. 2, as described above, laser machining system 1 includes: controller 21 and marker head 26 included in laser marker 2; and image processing apparatus 3.

Controller 21 includes a laser oscillator 240, a control board 210, a driver 220, and a driver power supply 230. A display device 6 and an input device 7 can be connected to controller 21. Display device 6 and input device 7 are used when a user changes a setting in controller 21 or the like.

### (b1. Controller 21)

### (1) Laser Oscillator 240

The following describes laser oscillator 240. Laser oscillator 240 includes an optical fiber 241, semiconductor lasers 242, 243, 249A to 249D, isolators 244, 246, couplers 245, 248, and a band pass filter 247.

Semiconductor laser 242 is a seed light source configured to emit seed light. Semiconductor laser 242 is driven by driver 220 to emit pulsed seed light.

Isolator 244 only permits light in one direction to pass therethrough and blocks incoming light in a direction reverse to the direction of the foregoing light. Specifically, isolator 244 permits the seed light emitted from semiconductor laser 242 to pass therethrough and blocks light returning from optical fiber 241. In this way, semiconductor laser 242 can be protected from being damaged.

Semiconductor laser 243 is an excitation light source configured to emit excitation light for exciting a rare earth element included in a core of optical fiber 241.

Coupler 245 couples the seed light from semiconductor laser 242 with the excitation light from semiconductor laser 243, and provides them to optical fiber 241.

The excitation light having entered optical fiber 241 from semiconductor laser 243 via coupler 245 is absorbed in the rare earth element included in the core of optical fiber 241. Accordingly, the rare earth element is excited, thus obtaining a population inversion state. In this state, when the seed light from semiconductor laser 242 enters the core of optical fiber 241, induced emission takes place. This induced emission amplifies the seed light (pulsed light). That is, the seed light is amplified when the seed light and the excitation light enter the fiber amplifier constituted of optical fiber 241.

Isolator 246 permits the pulsed light output from optical fiber 241 to pass therethrough and blocks light returning to optical fiber 241.

Band pass filter 247 is configured to permit light having a predetermined wavelength band to pass therethrough. The term "predetermined wavelength band" specifically refers to a wavelength band including a peak wavelength of pulsed light output from optical fiber 241. If spontaneous emission light is emitted from optical fiber 241, the spontaneous emission light is removed by band pass filter 247.

The laser light having passed through band pass filter 247 enters, via coupler 248, optical fiber 28 provided to transmit laser light. Each of semiconductor lasers 249A to 249D emits excitation light to amplify, in optical fiber 28, the laser light having passed through band pass filter 247.

Coupler 248 couples the pulsed light having passed through band pass filter 247 with the light from semiconductor lasers 249A to 249D, and provides them to optical fiber 28.

It should be noted that the configuration of laser oscillator 240 shown in Fig. 2 is exemplary and the configuration of laser oscillator 240 is not limited to this.

### (2) Control Board 210

Control board 210 includes a control unit 211, a pulse generation unit 212, a storage unit 213, and communication processing units 214 to 217.

Control unit 211 controls pulse generation unit 212 and driver 220 to control the entire operation of controller 21. Specifically, control unit 211 executes operating system and application program stored in storage unit 213, thereby controlling the entire operation of controller 21.

Pulse generation unit 212 generates an electric signal having a predetermined repetition frequency and a predetermined pulse width. Pulse generation unit 212 is controlled by control unit 211 to output an electric signal or stop outputting the electric signal. The electric signal from pulse generation unit 212 is supplied to semiconductor laser 242.

Storage unit 213 has various types of data stored therein in addition to the operating system and the application program. The data will be described later.

Communication processing unit 214 is an interface for communication with marker head 26. Control unit 211 transmits a control signal to marker head 26 via communication processing unit 214 and control cable 29.

Communication processing unit 215 is an interface for communication with image processing apparatus 3. Control unit 211 transmits various types of commands to image processing apparatus 3 via communication processing unit 215 and Ethernet cable 11. Moreover, control unit 211 receives responses, to the above commands, from image processing apparatus 3 via Ethernet cable 11 and communication processing unit 215. Details of exchange of the data (commands, responses, and the like) with image processing apparatus 3 via communication processing unit 215 will be described later (Fig. 6).

Communication processing unit 216 accepts an input from input device 7. Communication processing unit 216 notifies the accepted input to control unit 211.

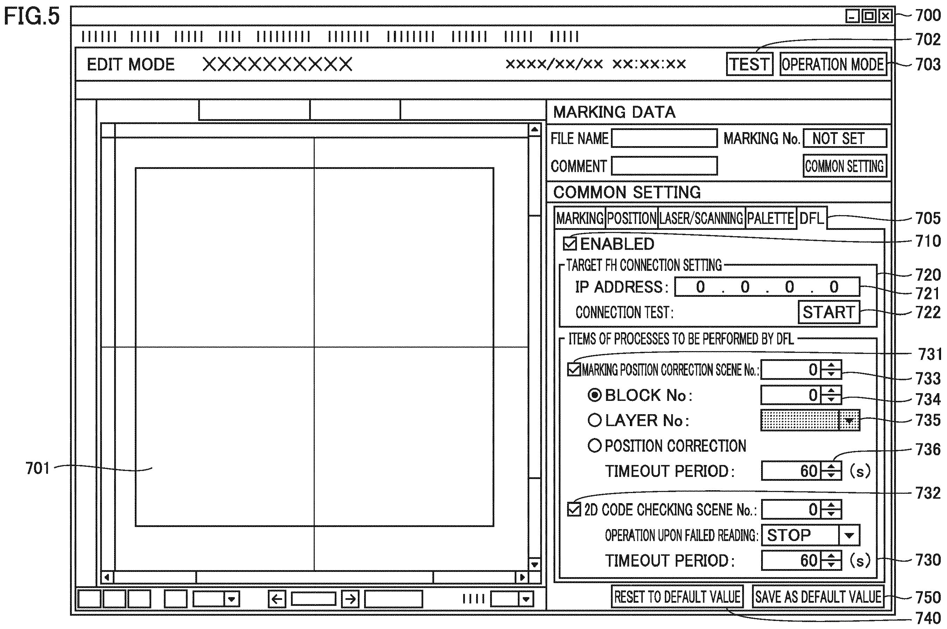

Communication processing unit 217 transmits image data generated by control unit 211 to display device 6. It should be noted that in this case, display device 6 displays an image (user interface) based on the image data. An exemplary user interface displayed on display device 6 will be described later (Fig. 5).

### (3) Driver 220 and Driver Power Supply 230

Driver power supply 230 supplies power to driver 220. Accordingly, driver 220 supplies driving current to semiconductor lasers 242, 243, 249A to 249D. When supplied with the driving current, each of semiconductor lasers 242, 243, 249A to 249D oscillates laser. The driving current supplied to semiconductor laser 242 is modulated by the electric signal from pulse generation unit 212. Accordingly, semiconductor laser 242 oscillates pulse, thereby outputting the pulsed light having the predetermined repetition frequency and predetermined pulse width (described above) as the seed light. On the other hand, each of semiconductor lasers 243, 249A to 249D is supplied with continuous driving current by driver 220. Accordingly, each of semiconductor lasers 243, 249A to 249D continuously oscillates to output continuous light as the excitation light.

### (b2. Marker Head 26)

Marker head 26 includes camera unit 261, an isolator 262, a collimator lens 263, a galvano scanner 264, and a condenser lens 265. Isolator 262 permits the pulsed light output from optical fiber 28 to pass therethrough and blocks light returning to optical fiber 28. The pulsed light having passed through isolator 262 is output to atmospheric air from collimator lens 263 associated with isolator 262, and enters galvano scanner 264. The galvano scanner scans with the laser light in at least one of a direction of a first axis (specifically, axis parallel to arrow A of Fig. 1) and a direction of a second axis orthogonal to the first axis. Condenser lens 265 collects laser light L scanned by galvano scanner 264.

### (b3. Image Processing Apparatus 3)

Image processing apparatus 3 includes a control unit 31, a storage unit 32, and communication processing units 33, 34.

Control unit 31 executes operating system and application program stored in storage unit 32, thereby controlling the entire operation of image processing apparatus 3.

Storage unit 32 has various types of data stored therein in addition to the operating system and the application program.

Communication processing unit 33 is an interface for communication with controller 21. Control unit 31 receives a command sent from controller 21 via Ethernet cable 11 and communication processing unit 33. Moreover, control unit 31 transmits a response, to the above command, to controller 21 via communication processing unit 33 and Ethernet cable 11.

Communication processing unit 34 is an interface for communication with camera unit 261 of marker head 26. Control unit 31 receives image data sent from camera unit 261 via communication cable 12 and communication processing unit 34.

### (b4. Hardware Configurations of Control Board 210 and Image Processing Apparatus 3)

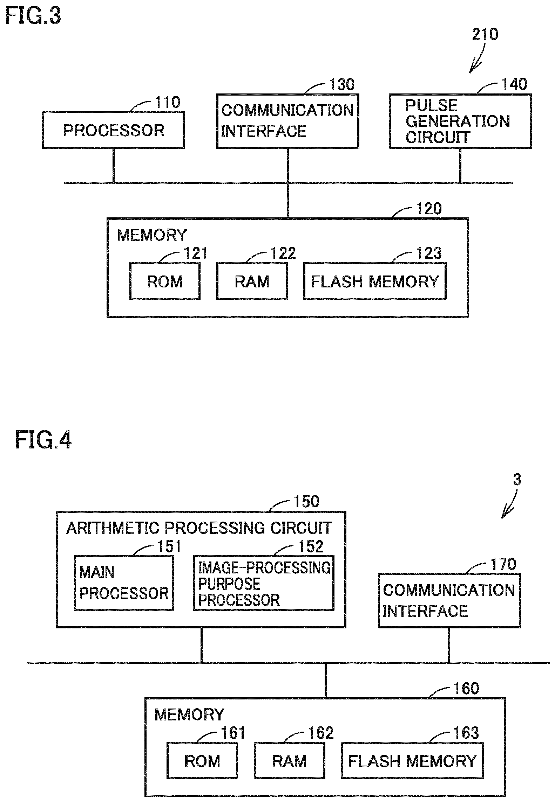

Fig. 3 is a schematic diagram showing hardware included in control board 210. With reference to Fig. 3, control board 210 includes a processor 110, a memory 120, a communication interface 130, and a pulse generation circuit 140.

Memory 120 is configured to include a ROM (Read Only Memory) 121, a RAM (Random Access Memory) 122, and a flash memory 123, for example. It should be noted that the above-described operating system, application program, and various types of data are stored in flash memory 123. Memory 120 corresponds to storage unit 213 shown in Fig. 2.

Processor 110 controls the entire operation of controller 21. It should be noted that control unit 211 shown in Fig. 2 is implemented by processor 110 executing the operating system and application program stored in memory 120. It should be noted that when executing the application program, the various types of data stored in memory 120 are referenced.

Communication interface 130 is for communication with an external device (for example, image processing apparatus 3, marker head 26, display device 6, or input device 7). The communication interface corresponds to communication processing units 214 to 217 in Fig. 2.

Pulse generation circuit 140 corresponds to pulse generation unit 212 in Fig. 2. That is, pulse generation circuit 140 generates the electric signal having the predetermined repetition frequency and the predetermined pulse width based on an instruction from processor 110.

Fig. 4 is a schematic diagram showing the hardware included in image processing apparatus 3. With reference to Fig. 4, image processing apparatus 3 includes an arithmetic processing circuit 150, a memory 160, and a communication interface 170. Arithmetic processing circuit 150 has a main processor 151 and an image-processing purpose processor 152.

Memory 160 is configured to include a ROM 161, a RAM 162, and a flash memory 163, for example. It should be noted that flash memory 163 has the above-described operating system, application program, and various types of data stored therein. Memory 120 corresponds to storage unit 213 shown in Fig. 2. It should be noted that memory 160 may be configured to have a HDD (Hard Disk Drive).

It should be noted that control unit 31 shown in Fig. 2 is implemented by arithmetic processing circuit 150 executing the operating system and application program stored in memory 160. It should be noted that when executing the application program, the various types of data stored in memory 120 (for example, image data of machining target 8 sent from camera unit 261) are referenced.

Main processor 151 controls the entire operation of image processing apparatus 3. Image-processing purpose processor 152 performs a predetermined process to the image data sent from camera unit 261 of marker head 26. It should be noted that instead of image-processing purpose processor 152, an ASIC (Application Specific Integrated Circuit) configured to perform image processing may be provided.

Communication interface 170 is for communication with an external device (for example, controller 21 or camera unit 261 of marker head 26). The communication interface corresponds to communication processing units 33, 34 in Fig. 2.

It should be noted that the hardware configuration shown in each of Fig. 3 and Fig. 4 is exemplary, and the hardware configuration is not limited to this.

### <C. Registration in Advance>

### (c1. Controller 21)

Fig. 5 shows a user interface 700 displayed on display device 6 by controller 21. User interface 700 is implemented by control unit 211 executing the application program stored in storage unit 213. Specifically, user interface 700 is displayed on display device 6 connected to controller 21 by processor 110 executing a program having a function of setting a layout of a mark to be provided.

Controller 21 can switch between screen modes in accordance with a flow of operation. Fig. 5 shows an edit mode screen used when creating and editing marking data. When the user's operation of clicking a button 703 is accepted, controller 21 switches the screen from the edit mode screen to an operation mode screen used when actually performing marking and machining. It should be noted that when the user's operation of clicking a button displayed on the operation mode screen is accepted, controller 21 switches the operation mode screen to the edit mode.

Moreover, when checking the marking data created and edited by the user, the user clicks a button 702. Accordingly, controller 21 displays a test marking screen on display device 6. The user can use the test marking screen to readily perform simulation using guide laser or actual laser for marking.

The following describes a setting process performed in the edit mode shown in Fig. 5.

The user registers a reference position (hereinafter, referred to as "reference position P") of a machining target using an input item of a common setting. Reference position P is a position (ideal position) at which the user considers that machining target 8 will be located. Moreover, also in image processing apparatus 3, the same position as reference position P is set as a reference position. That is, controller 21 and image processing apparatus 3 store the same position (specifically, the same coordinate values) for the respective reference positions. It should be noted that in the description below, the coordinates of reference position P is represented as (xp, yp) by using a coordinate system C including the X axis and the Y axis.

Further, the user employs a drawing region 701 to draw a letter/character, a figure, and/or a sign to be provided as a marking. It should be noted that the above-described coordinate system C is set for drawing region 701.

While a tab 705 is selected, controller 21 accepts a user setting with regard to a function called "DFL (Direct Finder Link)". The term "DFL" refers to a function of performing, by controller 21, various types of processes when receiving, from image processing apparatus 3, a response to a command having been directly issued to image processing apparatus 3 by controller 21. Examples of the various types of processes include: correction of a marking position (correction with regard to the X axis direction, Y axis direction, and rotation angle); determination as to reading of a two-dimension code (determination as to whether or not the two-dimension code has been read); and the like.

User interface 700 includes: a check box 710; a connection setting item 720 for a setting about image processing apparatus 3 to be connected; and an item 730 for a setting about an item of process to be performed by the DFL.

Check box 710 is provided to set whether to enable the DFL.

Item 720 has: an input box 721 for inputting an IP (Internet Protocol) address; and a button 722 for accepting an input of starting a connection test. The IP address of image processing apparatus 3 is input to input box 721.

Item 730 includes: check boxes 731, 732; and input zones 733, 736 to which a value or the like is input by the user. Check box 731 is configured to set whether to perform position correction. Check box 732 is configured to set whether to check the two-dimension code after marking machining target 8.

A marking position correction scene number is input to input zone 733. The term "scene" refers to a process including at least one or more processes. For example, one scene is configured to include a plurality of processes such as pre-process, edge detection, matching, and calculation of deviation amount. It should be noted that typically, a process corresponding to the check is included in the plurality of processes. Such a scene is set by the user in advance. Moreover, the scene is normally set individually at least based on each type of machining target 8.

A block number is input to input zone 734. The term "block" refers to data of drawing, such as mark, letter/character, and 2D code to be provided to machining target 8 by laser machining. When the block number is input, data for machining machining target 8 is specified in controller 21.

A layer number is input to input zone 735. The term "layer" refers to a collection of data for the same height in machining target 8 in connection with a difference in height direction, and a group of data for which position correction can be performed based on each layer.

A timeout period is input to input zone 736. The timeout period is the upper limit value of time for which controller 21 waits for a response from image processing apparatus 3. Specifically, the timeout period is a period of time during which controller 21 can accept a response from image processing apparatus 3 after transmitting a command to image processing apparatus 3.

User interface 700 further includes: a button 750 for saving an input content (setting) as a default value; and a button 740 for resetting a value to the default value.

For example, controller 21 can write, into an external memory in the form of a file, the content (so-called "marking recipe") set using user interface 700, or can transmit it to an external device. Accordingly, these settings can be introduced into a laser marker (not shown) other than laser marker 2.

As described above, controller 21 stores the application program for setting a layout of a mark to be provided using laser light L. Via user interface 700 displayed when the application program is executed, controller 21 accepts registration of a setting for causing image processing apparatus 3 to perform a scene (hereinafter, also referred to as "first scene") specified by the marking position correction scene number. Furthermore, as described above, via user interface 700, controller 21 accepts an input of the Internet Protocol address of image processing apparatus 3, and accepts an input of information for specifying machining target 8.

### (c2. Image Processing Apparatus 3)

As with controller 21, the coordinates (xp, xq) of reference position P are stored in storage unit 32 of image processing apparatus 3 in accordance with the user setting.

Moreover, a plurality of scenes are stored in image processing apparatus 3. Specifically, image processing apparatus 3 is configured to be capable of executing each of the plurality of scenes. Whether to execute a scene (process) by image processing apparatus 3 is determined in accordance with an instruction (command) from controller 21.

### <D. Control Structure in Laser Machining System 1>

Fig. 6 is a flowchart for illustrating a flow of process in laser machining system 1. It should be noted that in order to facilitate understanding of the flow of process, Fig. 6 illustrates both the process in controller 21 of laser marker 2 and the process in image processing apparatus 3.

Moreover, Fig. 6 illustrates a process when there is a check mark in check box 731 and there is no check mark in check box 732 in user interface 700 shown in Fig. 5. Furthermore, it is assumed that an marking position correction scene number is input in input zone 733.

With reference to Fig. 6, in a step S2, controller 21 determines whether or not the DFL is designated. Specifically, controller 21 determines whether or not there is a check mark in check box 710 in user interface 700. That is, controller 21 determines whether or not the DFL function is set to be enabled.

When it is determined that there is no designation for the DFL (NO in step S2), controller 21 performs marking such as letter/character marking. That is, controller 21 performs marking without performing position correction based on the deviation amount described below. Accordingly, machining to one machining target 8 is ended.

On the other hand, when it is determined that there is a designation for the DFL (YES in step S2), controller 21 determines whether or not there is registration for a correction target in step S4. Specifically, controller 21 determines whether or not a block number and a layer number are designated in user interface 700.

When it is determined that there is no registration for a correction target (NO in step S4), controller 21 ends the series of processes. On the other hand, when it is determined that there is registration for a correction target (YES in step S4), controller 21 makes a scene switching request in a step S6.

The term "scene switching request" refers to instructing image processing apparatus 3 to perform a scene (process). Specifically, the scene switching request is to transmit, to an apparatus (specifically, image processing apparatus 3) designated by the IP address, a command that is based on a scene number input in user interface 700 (marking position correction scene number input in input zone 733 in the case of Fig. 5). That is, the scene switching request is a process of transmitting, to image processing apparatus 3, a command for designating a scene.

As described above, controller 21 directly transmits the above-described command to image processing apparatus 3 through Ethernet cable 11, not via a control device such as a PLC.

When the command is received from controller 21, image processing apparatus 3 executes the command in a step S102. Specifically, based on the command received from controller 21, image processing apparatus 3 determines whether or not the scene designated in controller 21 (specifically, scene specified by the marking position correction scene number) can be executed. Specifically, image processing apparatus 3 determines whether or not the scene designated from controller 21 is included in a plurality of scenes registered in advance.

When image processing apparatus 3 confirms that the scene designated from controller 21 is included in the plurality of scenes, image processing apparatus 3 notifies, to controller 21 as a response to the command, a confirmation result (specifically, predetermined code) indicating that the scene designated from controller 21 is included in the plurality of scenes. On the other hand, when image processing apparatus 3 determines that the scene designated from controller. 21 is not included in the plurality of scenes, image processing apparatus 3 notifies, to controller 21 as a response to the command, a confirmation result (specifically, a predetermined code) indicating that the scene designated from controller 21 is not included in the plurality of scenes.

In step S8, controller 21 receives the confirmation result under a condition that image processing apparatus 3 transmitted the confirmation result to controller 21. In a step S10, the controller determines whether or not the scene switching request is permitted. It should be noted that when a response from image processing apparatus 3 cannot be received by the time input as the timeout period, controller 21 performs a process assuming that the "request is not permitted".

When it is determined that the request was not permitted (NO in step S10), controller 21 ends the series of processes. On the other hand, when it is determined that the request is permitted (YES in step S10), controller 21 makes a scene execution request in a step S12.

The term "scene execution request refers to instructing image processing apparatus 3 to perform the designated scene. Specifically, the scene execution request herein refers to transmitting, to image processing apparatus 3, a command for causing image processing apparatus 3 to perform the scene notified to image processing apparatus 3 by way of the scene switching request in step S6. That is, the "scene execution request" is a process for transmitting, to image processing apparatus 3, a command for causing image processing apparatus 3 to perform the designated scene.

As with the command for the scene switching request, controller 21 directly transmits the command for the scene execution request to image processing apparatus 3 through Ethernet cable 11, not via a control device such as a PLC.

When image processing apparatus 3 receives the command from controller 21, image processing apparatus 3 executes the command in step S104. Specifically, image processing apparatus 3 calculates a deviation amount D of machining target 8 relative to reference position P using image data of an image captured by camera unit 261 of marker head 26.

Image processing apparatus 3 notifies calculated deviation amount D to controller 21 as a response to the command. Moreover, when image processing apparatus 3 has failed in calculating deviation amount D, image processing apparatus 3 notifies, to controller 21, a content (specifically, predetermined code) indicating that image processing apparatus 3 has failed in calculating deviation amount D.

In a step S14, controller 21 receives the response (result) to the command, under a condition that image processing apparatus 3 has transmitted, to controller 21, the above-described deviation amount D or the code indicating the failure of the calculation of the deviation amount. Specifically, controller 21 receives deviation amount D or the code from image processing apparatus 3.

In step S16, controller 21 determines whether or not the scene execution request is permitted. Specifically, controller 21 determines whether or not deviation amount D has been obtained from image processing apparatus 3. It should be noted that when a response from image processing apparatus 3 cannot be received by the time input as the timeout period, controller 21 performs a process assuming that the "request is not permitted".

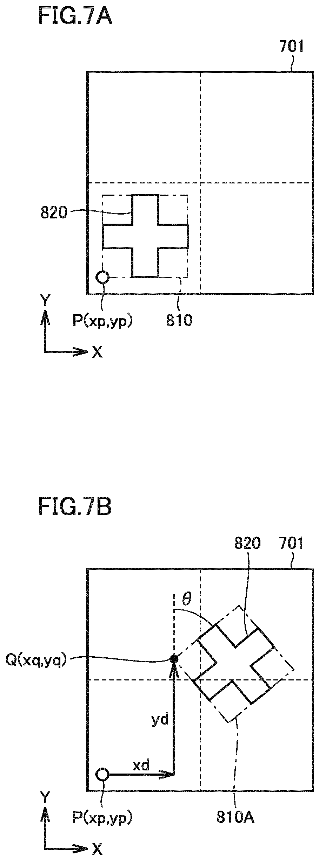

When it is determined that the request is not permitted (NO in step S16), controller 21 ends the series of processes. On the other hand, when it is determined that the request is permitted (YES in step S16), controller 21 corrects the marking position in a step S18. Specifically, before performing marking, controller 21 performs a process of deviating the marking position (position to be scanned with laser light L) from reference position P using deviation amount D obtained from image processing apparatus 3. The process will be specifically described later (Fig. 7A and Fig. 7B).

After correcting the marking position, in a step S20, controller 21 instructs marker head 26 to start marking. Specifically, controller 21 causes marker head 26 to provide machining target 8 with a mark drawn in user interface 700. In this way, marking to one machining target 8 is ended. Thereafter, such a series of processes are performed repeatedly for each machining target 8.

The above process is summarized as follows. It should be noted that in the description below, the term "first command" represents the command transmitted by controller 21 to image processing apparatus 3 in step S12. Likewise, the term "second command" represents the command transmitted by controller 21 to image Processing apparatus 3 in step S6.
(1) In the following, attention is paid to steps S6, S102, S18, S20. Controller 21 transmits the first command to image processing apparatus 3 to instruct image processing apparatus 3 to perform the first scene, when controller 21 is set to cause image processing apparatus 3 to perform the first scene (specifically, the scene specified by the marking position correction scene number). When image processing apparatus 3 receives the first command, image processing apparatus 3 calculates deviation amount D of machining target 8 relative to reference position P using image data of a captured image of machining target 8, and notifies deviation amount D to controller 21. Based on deviation amount D, controller 21 corrects the position to be scanned with laser light L, and then causes marker head 26 to perform the scanning.
   According to such a configuration, it is not necessary for a control device such as a PLC to execute a control program (for example, a ladder program) for controlling respective operations of laser marker 2 and image processing apparatus 3. Accordingly, the user does not need to create the control program in advance. Hence, according to laser machining system 1, laser marker 2 can implement laser machining in cooperation with image processing apparatus 3 without using a PLC.
(2) In the following, attention is paid to steps S6 and S102. Image processing apparatus 3 is capable of executing a plurality of scenes including the first scene. Before transmitting the first command, controller 21 transmits, to image processing apparatus 3, the second command for designating the first scene. Based on the second command, image processing apparatus 3 confirms that the designated first scene is included in the plurality of scenes, and then notifies a confirmation result to controller 21.
(3) In the following, attention is paid to step S12. Controller 21 transmits the first command to image processing apparatus 3 under a condition that the confirmation result is notified.
(4) In the following, attention is paid to step S102. When a third command for designating a second scene not included in the plurality of scenes is received from controller 21 instead of the second command before receiving the first command, image processing apparatus 3 provides controller 21 with a predetermined notification indicating that the scene designated in controller 21 cannot be performed.
(5) In the following, attention is paid to step S4. Controller 21 transmits the second command to image processing apparatus 3 under a condition that information for specifying machining target 8 is registered in controller 21.
(6) In the following, attention is paid to step S16. When controller 21 cannot receive deviation amount D from image processing apparatus 3 before passage of a predetermined period of time from the time at which the first command has been transmitted, controller 21 does not cause marker head 26 to perform scanning.

### <E. Position Correction>

Each of Fig. 7A and Fig. 7B illustrates marking position correction performed in laser marker 2. That is, each of Fig. 7A and Fig**.** 7B illustrates the correction (step S18 of Fig. 6) performed by laser marker 2 using deviation amount D obtained from image processing apparatus 3.

Fig. 7A shows an ideal position 810 of machining target 8. That is, ideal position 810 is a position at which the user is considered that machining target 8 will be located during marking with laser light L.

With reference to Fig. 7A, assuming that machining target 8 will be located in ideal position 810, the user draws a mark 820 in drawing region 701 of user interface 700. That is, the user generates a marking layout.

Reference position P is a position registered by the user. As one example, Fig. 7A shows a case where the same position as that of one (see an endpoint Q of Fig. 7B) of a plurality of endpoints of machining target 8 is registered as reference position P.

Fig. 7B illustrates an actual position of machining target 8 detected based on image data of an image captured by camera unit 261. It should be noted that for ease of description, Fig. 7B illustrates actual position 810A of machining target 8 in the same drawing region 701 as in Fig. 7A; however, the illustration as shown in Fig. 7B is not actually displayed in user interface 700.

As described above, laser marker 2 (precisely, controller 21) obtains deviation amount D from image processing apparatus 3. Deviation amount D includes: a deviation amount xd in the X axis direction; a deviation amount yd in the Y axis direction; and a rotation angle θ. Specifically, deviation amount D includes: a deviation amount (xd, yd) from coordinate values (xp, yp) of reference position P; and a rotation angle from a default angle (typically 0°). It should be noted that image processing apparatus 3 can calculate deviation amount D by detecting edge and endpoint of a target (machining target 8 in the example of the present embodiment) based on a captured image of the target.

It should be noted that when the default angle is not 0°, image processing apparatus 3 preferably stores the default angle. When image processing apparatus 3 does not store the default angle, controller 21 of laser marker 2 may correct the rotation angle θ obtained from image processing apparatus 3, using the default angle.

As shown in Fig. 7B, actually, the coordinate values of endpoint Q, which should have been the same as the coordinate values of reference position P in Fig. 7A, are deviated from the coordinate values (xp, yp) to coordinate values (xq, yq) by xd in the X axis direction and yd in the Y axis direction. Further, machining target 8 has been rotated by θ with respect to endpoint Q from the state shown in Fig. 7A in a predetermined direction (clockwise direction in the figure).

When laser marker 2 obtains deviation amount D from image processing apparatus 3, laser marker 2 performs correction to deviate the position of the marking by deviation amount D based on deviation amount D. In the example of Fig. 7A and Fig. 7B, the marking position is corrected to be the position of mark 820 shown in Fig. 7B. After correcting the marking position, laser marker 2 provides machining target 8 with mark 820 at the corrected position.

As described above, in the laser machining system, it is possible to correct not only the marking position in the X axis direction and Y axis direction but also deviation resulting from rotation.

### <F. Modification>

(1) In the description above, it has been illustrated that image processing apparatus 3 calculates deviation amount D; however, the configuration is not limited to this. For example, as described below, laser machining system 1 may be configured such that controller 21 calculates deviation amount D.
   When image processing apparatus 3 receives the first command (command transmitted by controller 21 to image processing apparatus 3 in step S12), image processing apparatus 3 calculates the position (actual position) of machining target 8 using image data and notifies the calculated position to controller 21.
   Controller 21 calculates deviation amount D of the calculated position relative to reference position P. Based on deviation amount D, controller 21 corrects a position to be scanned with laser light L, and then causes marker head 26 to perform scanning. With such a correction process, a predetermined marking can be provided to an intended position of machining target 8.
   Moreover, according to such a configuration, laser marker 2 can implement laser machining in cooperation with image processing apparatus 3 without using a PLC.
(2) Although it has been illustrated that marker head 26 includes camera unit 261, the configuration is not limited to this. Camera unit 261 may be an individual member and may be provided to be separated from marker head 26.

Although the present invention has been described and illustrated in detail, it is clearly understood that the same is by way of illustration and example only and is not to be taken by way of limitation, the scope of the present invention being interpreted by the terms of the appended claims.

## Claims

1. A laser machining system (1) comprising a laser machining apparatus (2) and an image processing apparatus (3),
the laser machining apparatus (2) including a controller (21) and a head (26), the controller (21) having an oscillator (240) configured to oscillate laser light (L), the head (26) being configured to scan a machining surface of a machining target (8) with the laser light (L) based on control of the controller (21),
the controller (21) being configured to transmit, to the image processing apparatus (3), a first command for instructing the image processing apparatus (3) to perform a first process, when the controller (21) is set to cause the image processing apparatus (3) to perform the first process,
when the first command is received, the image processing apparatus (3) being configured to calculate a deviation amount of the machining target (8) relative to a reference position (P) using image data of a captured image of the machining target (8) and to notify the deviation amount to the controller (21),
the controller (21) being configured to correct a position to be scanned with the laser light (L) based on the deviation amount and then cause the head (26) to perform the scanning.

2. The laser machining system (1) according to claim 1, wherein
the image processing apparatus (3) is capable of performing a plurality of processes including the first process,
the controller (21) is configured to transmit, to the image processing apparatus (3), a second command for designating the first process, before transmitting the first command, and
the image processing apparatus (3) is configured to confirm, based on the second command, that the designated first process is included in the plurality of processes, and then notify a result of the confirmation to the controller (21).

3. The laser machining system (1) according to claim 2, wherein the controller (21) is configured to transmit the first command to the image processing apparatus (3) under a condition that the result of the confirmation is notified.

4. The laser machining system (1) according to claim 2 or 3, wherein when a third command for designating a second process not included in the plurality of processes is received from the controller (21) instead of the second command before receiving the first command, the image processing apparatus (3) is configured to provide the controller (21) with a predetermined notification indicating that the process designated in the controller (21) is not able to be performed.

5. The laser machining system (1) according to any one of claims 2 to 4, wherein the controller (21) is configured to transmit the second command to the image processing apparatus (3) under a condition that information for specifying the machining target (8) is registered in the controller (21).

6. The laser machining system (1) according to any one of claims 1 to 5, wherein when the deviation amount is not able to be received from the image processing apparatus (3) before passage of a predetermined period of time from a time at which the first command is transmitted, the controller (21) is configured not to cause the head (26) to perform the scanning.

7. The laser machining system (1) according to any one of claims 1 to 6, wherein
the controller (21) stores an application program for setting a layout of a mark (820) to be provided by the laser light (L), and
the controller (21) is configured to accept, via a user interface displayed when the application program is executed, registration of a setting for causing the image processing apparatus (3) to perform the first process.

8. A laser machining system (1) comprising a laser machining apparatus (2) and an image processing apparatus (3),
the laser machining apparatus (2) including a controller (21) and a head (26), the controller (21) having an oscillator (240) configured to oscillate laser light (L), the head (26) being configured to scan a machining surface of a machining target (8) with the laser light (L) based on control of the controller (21),
the controller (21) being configured to transmit, to the image processing apparatus (3), a first command for instructing the image processing apparatus (3) to perform a first process, when the controller (21) is set to cause the image processing apparatus (3) to perform the first process,
when the first command is received, the image processing apparatus (3) being configured to calculate a position of the machining target (8) using image data of a captured image of the machining target (8) and notify the calculated position to the controller (21),
the controller (21) being configured to
calculate a deviation amount of the calculated position relative to a reference position (P), and
correct a position to be scanned with the laser light (L) based on the deviation amount, and then cause the head (26) to perform the scanning.

9. A machining control method in a laser machining system (1) including a controller (21), a head (26), and an image processing apparatus (3), the controller (21) having an oscillator (240) configured to oscillate laser light (L), the head (26) being configured to scan a machining surface of a machining target (8) with the oscillated laser light (L),
the machining control method comprising:
transmitting, by the controller (21) to the image processing apparatus (3), a command for instructing the image processing apparatus (3) to perform a predetermined process, under a condition that the controller (21) is set to cause the image processing apparatus (3) to perform the predetermined process;
calculating, by the image processing apparatus (3), a deviation amount of the machining target (8) relative to a reference position using image data of a captured image of the machining target (8) under a condition that the command is received;
notifying, by the image processing apparatus (3), the calculated deviation amount to the controller (21); and
correcting, by the controller (21), a position to be scanned with the laser light (L) based on the deviation amount, and then causing, by the controller (21), the head (26) to perform the scanning.
